# EUROPÄISCHE PATENTANMELDUNG

(11) **EP 2 048 496 A2**
(43) Veröffentlichungstag der Anmeldung: **15.04.2009**
(21) Anmeldenummer: 08450148.5
(22) Anmeldetag: 03.10.2008
(51) Int. Cl.: G01N 29/07, G01N 29/44

(54) **Verfahren sowie Vorrichtung zur Ultraschallprüfung**

(30) Priorität: 08.10.2007 AT 15952007
(71) Anmelder: Austrian Research Centers GmbH-ARC, 1220 Wien (AT)
(72) Erfinder: Hahn, Peter Alexander, 2435 Ebergassing (AT)
(74) Vertreter: Wildhack & Jellinek

(57) **Zusammenfassung**

Die Erfindung betrifft ein Verfahren sowie eine Vorrichtung zur Ultraschallprüfung bzw. zum Ultraschallscannen von Gegenständen unter Anwendung der Impulsechomethode.
Erfindungsgemäß ist vorgesehen, dass zur Signalanalyse das bzw. zumindest eines der jeweils vor oder nach dem Hauptmaximum (H) gelegene(n) Nebenmaximum(a), insbesondere das vor dem Hauptmaximum (H) gelegene Nebenmaximum (N) herangezogen wird (werden) (Fig. 1).

## Beschreibung

Die Erfindung betrifft ein Verfahren gemäß dem Oberbegriff des Patentanspruches 1 sowie eine Vorrichtung gemäß dem Oberbegriff des Patentanspruches 6.

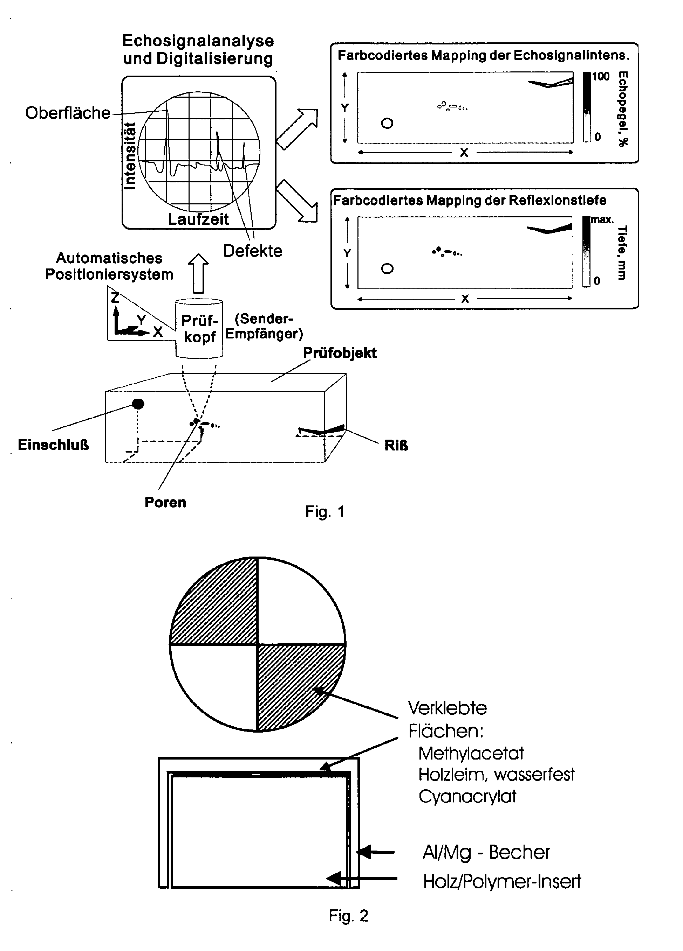

Das Funktionsprinzip des Ultraschall-Scans mittels Impuls-Echo-Mothode ist in Abb. 1 veranschaulicht und wird im folgenden kurz beschrieben. Durch den Prüfkopf wird ein Ultraschall-Impuls ausgesendet, der nach einer Vorlaufstrecke in einem Koppelmedium, z.B. Wasser, in das Prüfmuster eingekoppelt wird und sich darin weiter ausbreitet; trifft die Schallwelle dabei auf ein Hindernis, wie etwa eine Pore oder einen Riss, wird sie zumindest teilweise reflektiert und vom Prüfkopf registriert. Je nach Intensität und Laufzeit des registrierten Signals wird die entsprechende Stelle des Prüfmusters im vordefinierten Projektionsplan durch Farbe oder Grauton markiert; anschließend wird der Prüfkopf zur nächsten Position bewegt und der nächste Impuls generiert; dieser Vorgang wird solange wiederholt, bis das gesamte Prüfobjekt erfasst ist. Als Resultat dieser Signaldatenerfassung werden zwei farbcodierte Bilder für die Intensität des Echosignals (C-Bild) und die Reflexionstiefe (D-Bild) erhalten. Das von der Eintrittsoberfläche erzeugte Echosignal wird üblicherweise als Nullpunkt für die Laufzeitmessung der nachfolgenden Echos herangezogen, um damit über die Schallgeschwindigkeit die Reflexionstiefe zu bestimmen. Falls sich auf dem Pfad des Impulses keine Inhomogenität befindet, wird dieser erst an der unteren Begrenzungsfläche reflektiert.

Ziel der Erfindung ist die Erstellung eines Ultraschall-Prüfverfahrens bzw. einer entsprechenden Vorrichtung, das bzw. die es ermöglicht, die Qualität bzw. Festigkeit von Adhäsionsverbindungen (z.B. Verklebungen, Verpressungen, Kaltverschweißungen und Plattierungen) zwischen aus gleichen oder unterschiedlichen Werkstoffen bestehenden Werkstücken quantitativ zu bewerten. Wie bei der in der Prüflaborpraxis über viele Jahre bewährten konventionellen Prüfmethode zur Detektierung von Defekten in strukturell schlüssigen Verbindungen (z.B. Lötungen, Schweißungen, Sinterungen) wird die relevante Information aus der Analyse der von den Grenzflächen reflektierten Ultraschall-Echosignale gewonnen. Bei diesen zuletzt erwähnten Verbindungsarten erfolgt der Übergang der Ultraschall-Welle von einem Medium in das andere in Abhängigkeit von der Dichte und Elastizität der Medien mit vergleichsweise geringen Reflexionen, d.h. die Welle kann mehr oder weniger ungehindert die Grenzfläche passieren. An Stellen wo die Verbindung durch Inhomogenitäten (Einschlüsse, Poren, Risse, ...) unterbrochen wird, entstehen jedoch unmittelbar Reflexionen mit hoher Intensität, die durch die hohen akustischen Impedanzunterschiede bedingt sind. Für eine Vielzahl von "starken" stoffschlüssigen Werkstoffverbindungen ist es daher ausreichend, die Intensität des von der Grenzfläche reflektierten Echosignals zu bestimmen.

Im Falle von Verbindungen mit adhäsivem Charakter, z.B. Verklebungen, Verpressungen, Plattierungen, ist keine ausgeprägte Übergangszone vorhanden und die Intensität der reflektierten Echosignale ist verhältnismäßig hoch und von jenen, die von Defekten in der Grenzfläche verursacht werden, kaum zu unterscheiden. Die Fachwelt ist daher der Ansicht, dass die Ultraschall-Scan-Methode zur Prüfung derartiger Verbindungstypen nicht geeignet ist.

In einer Serie von Ultraschall-Prüfungen von flächigen Verbindungen, beispielsweise zwischen diversen Aluminium- und Magnesium-Legierungen und einem Polymer-Holzgemisch, konnte der Nachweis erbracht werden, dass durch eine gezielte Analyse der von der Grenzfläche stammenden Reflexionssignale sehr wohl eine Unterscheidung zwischen verklebten und nicht verbundenen Zonen möglich ist. Im Unterschied zur bisher angewandten Signalanalyse wurde erfindungsgemäß nicht die Intensitätsspitze des Echosignals als Grundlage für die Schallkoppelung herangezogen, sondern vielmehr die vor oder nach der Spitze auftretenden Nebenmaxima. Während die Intensitätsunterschiede des Hauptmaximums zwischen verklebten und nicht verklebten Stellen im Bereich von einigen Prozent lag, wurden bei den Nebenmaxima Differenzen von 50 % und mehr festgestellt, wodurch die Detektionsempfindlichkeit wesentlich verbessert werden konnte.

Ein Verfahren der eingangs genannten Art ist erfindungsgemäß mit den im Kennzeichen des Anspruches 1 aufscheinenden Merkmalen charakterisiert. Eine Vorrichtung der eingangs genannten Art ist mit den im Kennzeichen des Anspruches 6 aufscheinenden Merkmalen charakterisiert.

Es zeigte sich, dass das erfindungsgemäße Verfahren vor allem zur Prüfung von Adhäsionsverbindungen, insbesondere von miteinander verpresste oder kontaktierte Teile oder von miteinander verklebte, insbesondere flächig verbundene, vorzugsweise mit hart aushärtenden Klebern, z.B. Zyanacrylat, Holzleim, Zweikomponentenkleber, verbundene Teile aufweisenden Gegenständen eingesetzt werden kann.

Optimale Ergebnisse werden erreicht, wenn das jenige Nebenmaximum für die Auswertung ausgewählt wird, dessen Intensitätsmaximum in einem Abstandsbereich von 100 bis 300 %, vorzugsweise 100 bis 200 %, der Halbwertsbreite vom Intensitätsmaximum des Hauptmaximums entfernt liegt.

Abb. 2 zeigt den Aufbau eines Prüfmusters, das zur Unterscheidung zwischen einer vorhandenen und einer nicht vorhandenen Verbindung mit Hilfe der neuen Ultraschall-Prüfmethode verwendet wurde. Zu diesem Zweck wurde auf zwei Quadranten der Stirnfläche eines Holz/Polymer-Kerns eine Klebeschicht aufgetragen und der Kern anschließend mit der inneren Fläche des Becherbodens verbunden.

Im folgenden wird die Erfindung anhand der Zeichnungen näher erläutert.

Abb. 1 zeigt eine schematische Darstellung eines Ultraschall-Scannprüfverfahrens mit der Darstellung der Echointensität (C-Bild oben rechts) unter Reflexionstiefe (D-Bild Mitte rechts). Abb. 2 zeigt eine schematische Darstellung der Verklebung zwischen einem Leichtmetallbecher und einem Holz/Polymer-Insert, wobei einander gegenüberliegende Viertelkreissektoren des Bechers bzw. des Inserts verklebt bzw. nicht verbunden waren.

Abb. 3 zeigt den zeitlichen Verlauf der Ultraschallechointensität mit dem Eintrittsecho (vertikale Linien in der linken Bildhälfte) unter Reflexion am Interface zwischen Metall- und Kunststoff-Kern für einen Quadranten mit Klebeschicht zwischen Metall und Kunststoff (linkes Teilbild) und einen Sektor ohne Verklebung (rechtes Teilbild).

Abb. 4 zeigt die Intensitätsauswertung eines Ultraschall-Scanns für die Grenzfläche zwischen dem Leichtmetall und dem Holz/Polymer-Kern, die mit Zyanacrylat verklebt wurden. Der größere Flächenteil kennzeichnet den verklebten Bereich und der kleinere Anteil Quadranten ohne Verbindung.

Abb. 5 zeigt eine Ansicht des Leichtmetallbechers und des sektorenweise ausgefrästen Holz/Polymer-Kern.

Abb. 6 zeigt ein Ultraschallscannbild mit unterschiedlichen Echointensitäten zwischen kontaktierten Sektoren und ausgefrästen Sektoren.

Bei der Durchführung des erfindungsgemäßen Verfahrens kann beispielsweise die Einschallung mit einem 20 MHz fokussierenden Prüfkopf von der Außenseite des Becherbodens erfolgen, wo die primäre Echoreflexion durch den Übergang Wasser - Leichtmetall (LM) erzeugt wird. Die Schallimpulse breiten sich parallel zur Becherachse im Leichtmetall aus und erfahren an der Innenseite des Becherbodens beim Interface LM - Luft - Kern bzw. LM - Klebstoff - Kern eine sekundäre Reflexion.

Unter Zugrundelegung der höheren akustischen Impedanz des LM - Luft - Kern-Überganges ist eine ultraschalltechnische Unterscheidung zwischen verklebten und nicht verbundenen Quadranten möglich.

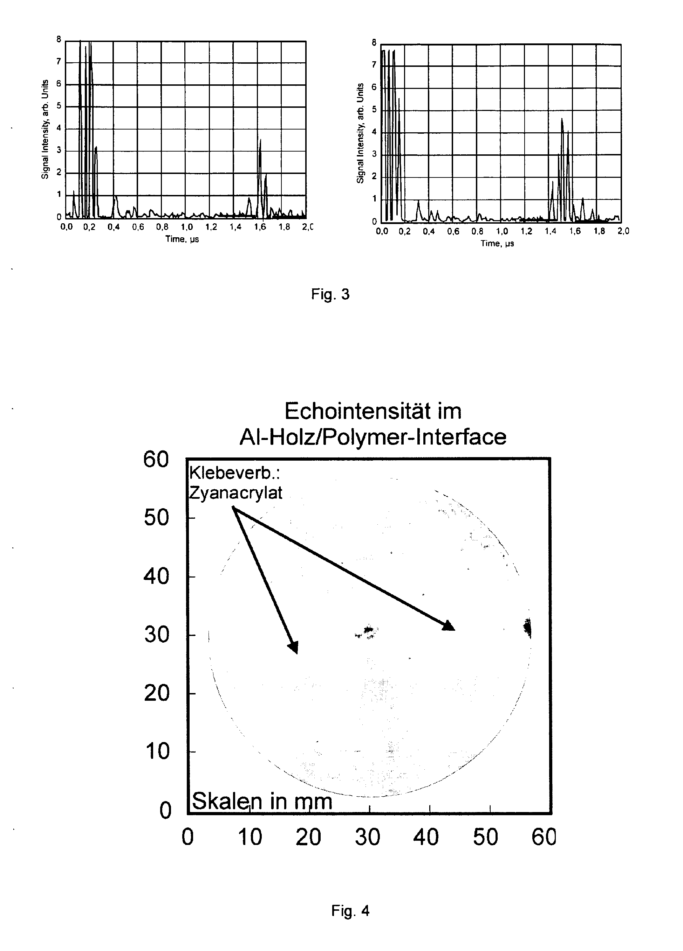

Im Echointensitäts-Zeit-Diagramm gemäß Abb. 3 treten die Unterschiede in der Charakteristik der an der Grenzfläche registrierten Echosignale deutlich in Erscheinung: während das Hauptmaximum H des Signals bei Quadranten ohne Verklebung lediglich einen Zuwachs von 20 % gegenüber verklebten Sektoren aufweist, ist bei dem Nebenmaxima N vor der aufsteigenden Flanke des Intensitätsmaximums des Hauptmaximums H nahezu eine Verdoppelung der Signalstärke zu beobachten. Das vor dem Hauptmaximum liegende Nebenmaximum N liefert eine prägnante Aussage, d.h. hohe Signalintensität bei nicht verklebten bzw. nicht kontraktierenden Zonen und eine beträchtlich abgeschwächte Intensität bei verklebten bzw. kontraktierenden Flächen.

In Abb. 4 ist die Auswertung bezüglich der Intensität dieser sekundären Signalspitzen in Form eines C-Scan-Bildes dokumentiert, wobei in Quadranten ohne Verklebung eine signifikant höhere Signalstärke registriert wurde als in verklebten Sektoren. Die flächenmäßig größeren verklebten Sektoren im Vergleich zu den unverbundenen Segmenten kamen durch das "Zerfließen" des Klebstoffs beim Einpressen des Kerns in den Leichtmetall-Becher zustande.

Ferner besteht die Möglichkeit, den physischen Kontakt bzw. die "Berührung" zwischen LM und Holz/Polymer-Kern ohne Einsatz von Adhäsionsmedien bzw. Klebern mittels Ultraschallprüftechnik nachzuweisen. Zum Unterschied zu der oben beschriebenen Prüfkonfiguration wurde hier keine Verklebung vorgenommen sondern die beiden Komponenten bzw. Teile lediglich unter leichtem mechanischem Druck "aneinandergepresst".

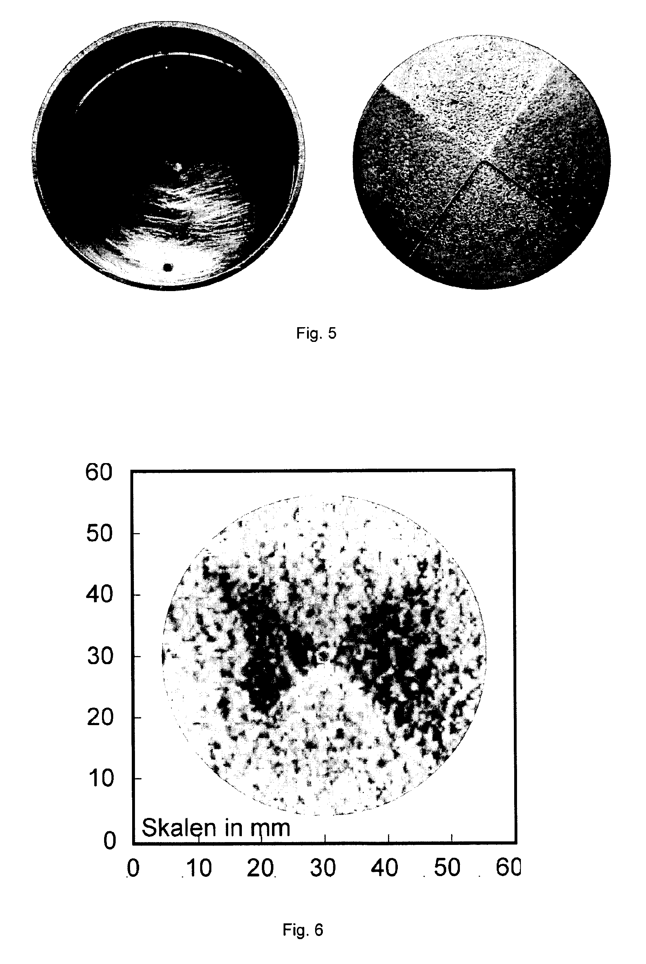

Dazu wurden aus der Stirnfläche des Holz/Polymer-Kerns zwei gegenüberliegende Quadranten in einer Tiefe von etwa 1 mm herausgefräst (Abb. 5), womit nach dem Einschieben des Kerns in den LM-Becher nur die zwei erhabenen Sektoren den Becherboden berühren, wobei die Flächen einigermaßen parallel zueinander verlaufen und keine großen Oberflächenrauhigkeiten oder Verwerfungen "Buckel" vorliegen.

Der LM-Becher und der Kern wurden während der Ultraschallprüfung mechanisch aneinandergepresst. Die ausgeübte Kraft betrug ca. 75 N.

Die Ergebnisse der durchgeführten Ultraschall-Scans sind in Abb. 6 veranschaulicht. Zumindest über große Flächenanteile konnte zwischen den "kontaktierenden" und den abgesetzten Quadranten des Kerns unterschieden werden. Wie bei den verklebten Mustern wurde auch hier ein Anstieg der Echointensität des Nebenmaximums über den abgefrästen Sektoren registriert, wie auf Grund der Unterschiede in der akustischen Impedanz bei den jeweiligen Übergängen LM - Holz/Polymer-Kern bzw. LM - Wasser/Luft - Kern zu erwarten war.

Die Teilbilder der Abb. 3 zeigen den zeitlichen Verlauf der Ultraschall-Intensität beginnend mit einem sehr hohen, über die Skalenbegrenzung reichenden Signalausschlag. Der Schnittpunkt der Signallinie mit der eingezeichneten horizontal verlaufenden Linie definiert den Auslöse- bzw. Triggerpunkt für die weitere Signalregistrierung, d.h. die vom Operateur der Prüfanlage eingestellten RegistrierIntervalle, die in den Diagrammen der Abb. 3 durch horizontal verlaufende Balken angezeigt sind, werden automatisch auf gleicher zeitlicher Distanz zum Triggerpunkt gehalten. In der gegenständlichen Prüfkonfiguration wird diese zeitliche

Distanz im Wesentlichen durch die Dicke des LM-Becherboden vorgegeben und bei konstant bleibender Dicke des LM ist daher auch keine zeitliche Verschiebung zwischen dem Eintrittsecho und dem Echo aus der Grenzschicht LM - Kunststoff zu erwarten.

Berücksichtigenswert bezüglich der Signalerfassung wären allenfalls Dickenvariationen, die zwangsläufig eine zeitliche Verschiebung des von der Grenzschichte ausgehenden Echosignals verursachen. Nachdem die Registrierintervalle jedoch in konstantem zeitlichen Abstand zum Triggerpunkt bleiben, kommt es in solchen Fällen zu einer Verschiebung des Echosignals aus dem Registrierintervall. Die vor der Hauptintensität auftretenden sekundären Signalmaxima bzw. Nebenmaxima könnten somit aus dem Registrierintervall "hinausgedrängt" werden und es würde nur die Hauptintensität registriert und zur weiteren Signalverarbeitung und Darstellung in den Scan-Bildern herangezogen. In letzter Konsequenz könnten diese Unzulänglichkeit zu falschen Ergebnissen und Fehlinterpretationen über die Beschaffenheit der Werkstoffverbindung führen.

Eine adäquate Problemlösung kann durch eine Prüfsoftware - speziell des Signalerfassungsmoduls - erreicht werden, indem nämlich nicht das Eintrittsecho sondern die Intensitätsspitze des von der Grenzschicht selbst ausgehende Echosignal zur Triggerung verwendet wird und das Registrierintervall vom Eintrittsecho zeitlich entkoppelt wird, d.h. bei zeitlichen Verschiebungen der von der Grenzschicht ausgehenden Echosignalspitze würde das Registrierintervall quasi "mitgenommen". Zweckmäßig ist es somit, wenn der Signalauswerteeinheit zur Festlegung des Triggerzeitpunktes für die Signalauswertung das Intensitätsmaximum des Hauptmaximums bzw. des von der Grenzschicht selbst ausgehenden Echosignals zugeführt ist.

Zur Realisierung dieser Funktionalität wird jener Teil der Anwendersoftware dahingehend modifiziert, dass auch Signaldaten vor dem Triggerzeitpunkt registriert werden und dem Prüfsystem für die Weiterverarbeitung zur Verfügung gestellt werden.

## Patentansprüche

1. Verfahren zur Ultraschallprüfung bzw. zum Ultraschallscannen von Gegenständen unter Anwendung der Impulsechomethode, **dadurch gekennzeichnet, dass** zur Signalanalyse das bzw. zumindest eines der jeweils vor oder nach dem Hauptmaximum (H) gelegene(n) Nebenmaximum(a), insbesondere das vor dem Hauptmaximum (H) gelegene Nebenmaximum (N) herangezogen wird (werden).

2. Verfahren nach Anspruch 1, **dadurch gekennzeichnet, dass** das Verfahren zur Prüfung von Adhäsionsverbindungen, insbesondere von miteinander verpresste oder kontaktierte Teile oder von miteinander verklebte, insbesondere flächig verbundene, vorzugsweise mit hart aushärtenden Klebern, z.B. Zyanakrylat, Holzleim, Zweikomponentenkleber, verbundene Teile aufweisenden Gegenständen eingesetzt wird.

3. Verfahren nach Anspruch 1 oder 2, **dadurch gekennzeichnet, dass** das jenige Nebenmaximum (N) für die Auswertung ausgewählt wird, dessen Intensitätsmaximum in einem Abstandsbereich von 100 bis 300 %, vorzugsweise 100 bis 200 %, der Halbwertsbreite vom Intensitätsmaximum des Hauptmaximums (H) entfernt liegt.

4. Verfahren nach einem der Ansprüche 1 bis 3, **dadurch gekennzeichnet, dass** zur Triggerung der Signalaufzeichnung und -auswertung das Intensitätsmaximum des Hauptmaximums bzw. des von der Grenzschicht zwischen den miteinander verbundenen Teilen selbst ausgehenden Echosignals, verwendet wird.

5. Verfahren nach einem der Ansprüche 1 bis 4, **dadurch gekennzeichnet, dass** zusätzlich zum Nebenmaximum (N) auch das Hauptmaximum (H) ausgewertet wird.

6. Vorrichtung zur Ultraschallprüfung bzw. zum Ultraschallscannen von Gegenständen unter Anwendung der Impulsechomethode, insbesondere zur Durchführung des Verfahrens nach einem der Ansprüche 1 bis 5, **dadurch gekennzeichnet, dass** die Signalauswerteeinheit in der Empfangseinheit (E) des Gerätes zur Signalanalyse bzw. -aufzeichnung das bzw. zumindest eines der vor oder nach dem Hauptmaximum gelegene(n) Nebenmaximum(a), insbesondere das vor dem Hauptmaximum (H) gelegene Nebenmaximum (N), herangezogen wird (werden).

7. Vorrichtung nach Anspruch 6, **dadurch gekennzeichnet, dass** dasjenige Nebenmaximum (N) zur Signalauswertung in der Empfangseinheit aufgenommen bzw. ausgefiltert wird, dessen Intensitätsmaximum in einem Abstandsbereich von 100 bis 300 %, vorzugsweise 100 bis 200 %, der Halbwertsbreite vom Intensitätsmaximum des Hauptmaximums (H) entfernt liegt.

8. Vorrichtung nach Anspruch 6 oder 7, **dadurch gekennzeichnet, dass** der Signalauswerteeinheit zur Festlegung des Triggerzeitpunktes für die Signalauswertung das Intensitätsmaximum des Hauptmaximums (H) bzw. des von der Grenzschicht selbst ausgehenden Echosignals zugeführt ist.
